(19) Europäisches Patentamt

European Patent Office

Office européen des brevets

(11) EP 0 564 095 B1

(12) **EUROPEAN PATENT SPECIFICATION**

(45) Date of publication and mention
of the grant of the patent:
**10.09.1997   Bulletin 1997/37**

(51) Int Cl.6: **F24F 11/02**, F25B 49/02,
H02H 7/08

(21) Application number: **93301566.1**

(22) Date of filing: **02.03.1993**

(54) **Load current detector**

Laststromerfassungsvorrichtung

Détecteur du courant de charge

(84) Designated Contracting States:
**DE FR GB IT**

(30) Priority: **03.04.1992   JP   110798/92**

(43) Date of publication of application:
**06.10.1993   Bulletin 1993/40**

(73) Proprietor: **SANYO ELECTRIC CO., LTD.
Moriguchi-shi, Osaka (JP)**

(72) Inventors:
  • **Isobe, Tomonori
    Ohizumimati, Ohra-gun, Gunma-ken (JP)**
  • **Ishihara, Manabu
    Isesaki-shi, Gunma-ken (JP)**
  • **Funagoshi, Tomohide
    Ohizumimati, Ohra-gun, Gunma-ken (JP)**

  • **Hosogai, Kazunobu
    Asikaga-shi, Totigi-ken (JP)**
  • **Nakae, Tsugio
    Ohizumimati, Ohra-gun, Gunma-ken (JP)**

(74) Representative: **Cozens, Paul Dennis et al
Mathys & Squire
100 Grays Inn Road
London WC1X 8AL (GB)**

(56) References cited:
EP-A- 322 518                WO-A-90/12325
DE-A- 3 634 731              US-A- 4 810 943

  • PATENT ABSTRACTS OF JAPAN vol. 013, no.
    380 (M-863) 23 August 1989 & JP-A-01 131 840
    (FUJITSU GENERAL) 24 May 1989

## Description

The present invention relates to a method of detecting a load current flowing in an electric load such as an air conditioner, and to a load current detector.

There are many types of electric loads which receive power from AC power supplies. A method of detecting an operating current flowing in such an electrical load such as an air conditioner, especially a home air conditioner, taken as an example will be described below.

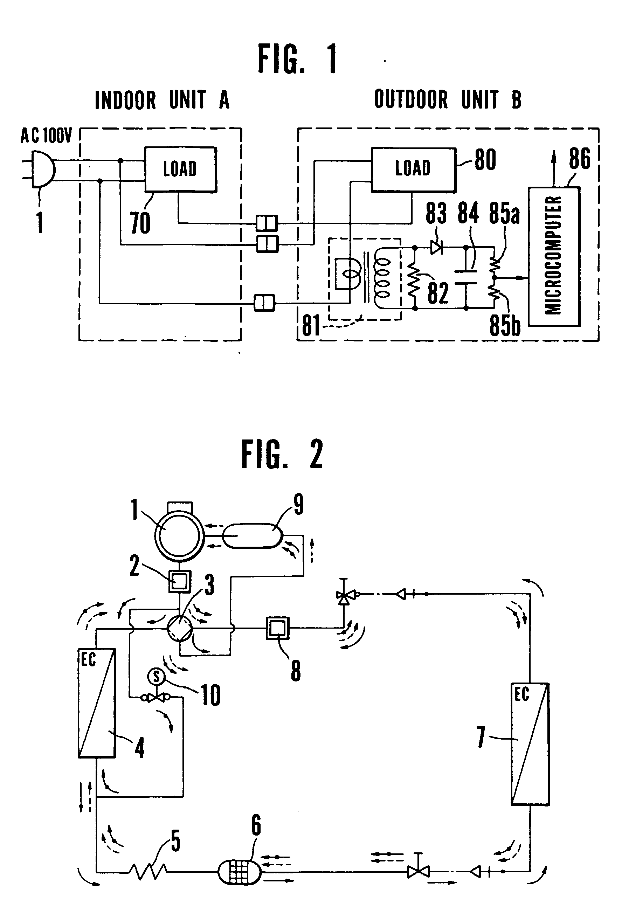

A separate type air conditioner is generally known, which is constituted by an indoor unit A and an outdoor unit B, as shown in Fig. 1. The indoor unit A includes a load 70 such as a fan motor, a flap motor, and a control microcomputer in addition to a heat exchanger. The outdoor unit B includes a load 80 such as a compressor and a control microcomputer in addition to a heat exchanger, a fan motor, and an expansion device.

A home air conditioner is normally operated with a commercial AC power supply such as 100 [V]. Since a maximum current capable of flowing safely through a branch circuit connected to a plug 1 is set to be 20 [A], if the power consumption of the air conditioner increases, and the operating current exceeds 20 [A], a circuit breaker is operated to turn off the power supply. For this reason, the operating current in the air conditioner is detected. When the detected current is about to exceed 20 [A], the current flowing in the compressor is decreased to reduce its consumed current.

As shown in Fig. 1, a conventional operating current detector includes a current transformer (C.T.) 81 for detecting a load current flowing in the outdoor unit B. The primary side of the current transformer 81 is inductively coupled to a feeder connected to the load 80. A current output from the secondary side of the current transformer 81 is rectified and smoothed by a resistor 82, a diode 83, and a smoothing capacitor 84. The resultant current is voltage-divided by resistors 85a and 85b to be input, as a proper DC voltage, to the A/D port of a microcomputer 86 where it is determined whether the operating current reaches a preset value.

Since a capacitor having a large capacitance is used as the smoothing capacitor 84 in such an operating current detector, the capacitor 84 serves as a low-pass filter. For this reason, in an air conditioner of inverter type for example, if the current flowing in the compressor is increased to increase the cooling/heating power quickly, although the actual operating current quickly increases, an increase in operating current which is detected by the current transformer 81 and is input to the microcomputer 86 tends to be slightly delayed from the actual increase in operating current. If, therefore, the preset value of an operating current, at which the power supply is turned off, is set to be equal to the permissible current, i.e., 20 [A], the actual operating current overshoots the permissible current of 20 [A]. In the current state, the preset value is set to be about 18 [A], which is lower than the permissible current of 20 [A], in consideration of a safety margin, in order to prevent the actual operating current from exceeding the permissible current of 20 [A].

In the conventional operating current detector, the capacitance of the smoothing capacitor 84 is set to be large to obtain a current value close to the peak value of the current, thereby compensating for a delay in current change.

With such measures, however, good response characteristics with respect to changes in current and a proper current value cannot both be obtained. In addition, when the current waveform is distorted, the difference between the detected current value and the actual current is large.

It is, however, preferable that the preset current value at which the power supply is turned off be close to 20 [A], because the increase in current through the compressor can gain the maximum cooling/heating power.

Although detection of an operating current in an air conditioner, as an example, has been described above, the same applies to other electrical loads using an operating current detector including a smoothing capacitor.

Other relevant prior art is described in International Publication No. WO 90/12325 which describes a sampling circuit, particularly for sampling voltage and current amplitudes in an AC kWh meter. Signals from transducers representing the voltage and current amplitues respectively are selectively applied to an analogue-to-digital converter by an analogue multiplexer under the control of a processor which varies the sequence in which the signals are applied to the converter. The processor performs calculations on values measured by the converter to derive the kWh.

Also of interest is European Publication No. EP-A-0322518 which describes a digital protective relay. The amplitude value calculation of an AC-current is performed using three sampling values and the calculation result is obtained at high speed, and even if the frequency is varied the calculation is performed with high accuracy; thereby performance of the digital protective relay can be significantly improved.

The present invention has been made in consideration of the above situation, and thus aims to increase the power of an electric load by relatively accurately detecting changes in operating current flowing in the electric load, to which AC power is supplied and setting a preset value, at which the supply of power to the load is cut, to be close to a permissible current value.

It is described below how the current waveform of AC power supplied from a power supply to an electric load is converted into A/D (analog/digital)-converted changes in current value at a predetermined period, and the average value of these current values is detected as the current value of power supplied from the power supplied from the power supply to the electric load.

In addition, there is described a current detecting method wherein a current waveform is converted into A/D (analog/digital)-converted changes in current value at a predetermined period, and correction control is performed on the basis of the average value of these current values in the direction in which the power of a load is decreased.

The accurate effective value of a current flowing in a load can be obtained by directly inputting a current waveform as digital data, and obtaining the average value of the digital data.

According to the present invention there is provided apparatus for detecting an alternating current flowing in an electric load according to claim 1.

Preferred features of the invention are now described, by way of example, with reference to the accompanying drawings, in which:-

Fig. 1 is a circuit diagram showing a current detector used in a conventional air conditioner;
Fig. 2 is a diagram showing a refrigeration cycle in an air conditioner to which the present invention is applied;
Fig. 3 is a circuit diagram showing a control circuit of the air conditioner to which the present invention is applied;
Fig. 4 is a circuit diagram showing a current detector according to the present invention;
Fig. 5 is a graph showing the waveform of a voltage output from the current detector according to the present invention;
Fig. 6 is a flow chart showing a current calculating operation performed by a microcomputer in the present invention;
Fig. 7 is a flow chart showing another current calculating operation performed by the microcomputer in the present invention;
Fig. 8 is a flow chart showing frequency correction processing performed on the basis of an output from the current detector according to the present invention;
Fig. 9 is a graph showing a state of an operating current based on an output current from a current transformer;
Fig. 10 is a graph showing changes in current to make a comparison between current detection performed by the present invention and current detection performed by the prior art;
Fig. 11 is a circuit diagram showing another current detector used in a conventional air conditioner;
Figs. 12(a) to 12(c) are charts showing the waveforms of outputs from some components of the conventional current detector in Fig. 11;
Fig. 13 is a chart showing the waveform of a single-phase component of a three-phase current which flows in a current transformer when three-phase AC power is used; and
Fig. 14 is a circuit diagram showing a current detector according to another embodiment of the present invention.

Fig. 2 is a diagram showing a refrigeration cycle in an air conditioner as an example of electric loads to which the present invention is applied.

Referring to Fig. 2, reference numeral 1 denotes a hermetic compressor incorporating a motor element and a compression element driven by the motor element; 2, a muffler for reducing noise made by a refrigerant discharged from the compressor 1; 3, a 4-way valve for changing the direction of the refrigerant in a cooling/heating operation; 4, a heat-source-side heat exchanger; 5, a capillary tube (expansion device); 6, a screen filter; 7, a use-side heat exchanger; 8, a muffler; 9, an accumulator; and 10, a solenoid valve.

The refrigerant discharged from the compressor 1 flows in three modes respectively indicated by the solid arrows (cooling operation), the broken arrows (heating operation), and the dotted arrows (defrosting operation) in accordance with the state of the 4-way valve 3 and the opened/closed states of the solenoid valve 10. In a cooling operation, the heat-source-side heat exchanger 4 serves as a condenser, whereas the use-side heat exchanger 7 serves as an evaporator. In a heating operation, the use-side heat exchanger 7 serves as a condenser; and the heat-source-side heat exchanger 4, an evaporator. In a defrosting operation, part of the refrigerant, discharged from the compressor 1, which in the heating operation, is directly supplied to the heat-source-side heat exchanger 4 to raise the temperature of the heat-source-side heat exchanger 4, thereby performing a drying operation therein while conducting the heating operation.

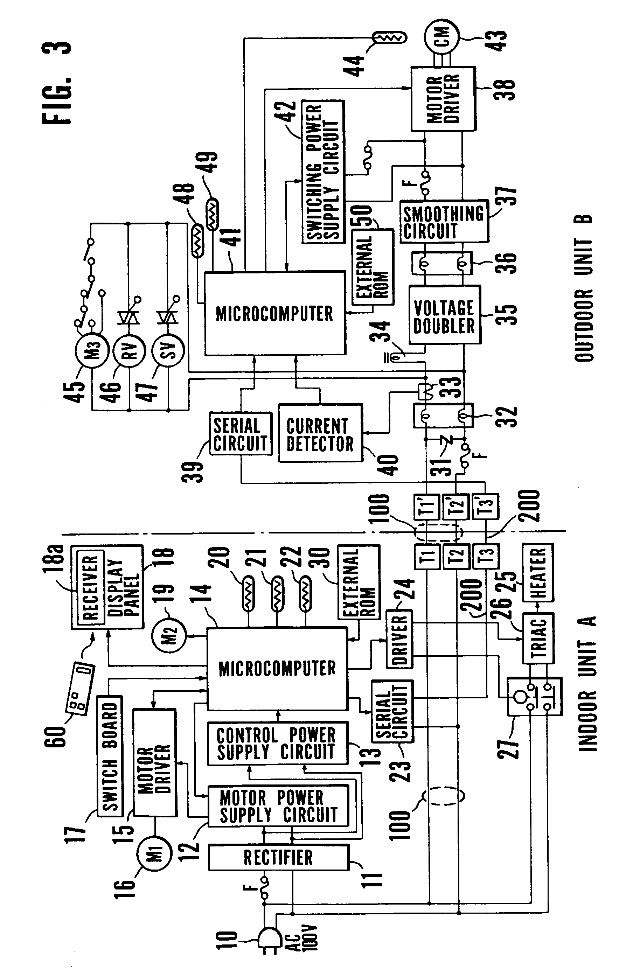

Fig. 3 shows a control circuit in the air conditioner to which the present invention is applied. The circuit portion located on the left side of the chain line drawn in the middle of Fig. 3 corresponds to a control circuit arranged in an indoor unit A; and the circuit portion located on the right side, corresponds to a control circuit arranged in an outdoor unit B. The two control circuits are connected to each other through power lines 100 and a communication line 200.

The control circuit in the indoor unit A comprises a rectifier 11, a power supply circuit 12 for motors, a power supply circuit 13 for controlling, a motor driver 15, a switch board 17, a receiver 18a, a display panel 18, and a flap motor $(M_2)$ 19. The rectifier 11 rectifies an AC voltage of 100 [V] applied by a plug 1. The power supply circuit 12 for motors adjusts a DC voltage, which is applied to a DC fan motor (brushless motor) $(M_1)$ 16 for blowing cool air into a room to be air-conditioned, into a voltage of 10 to 36 [V] in accordance with a signal from a microcomputer 14. The power supply circuit 13 generates a DC voltage of 5 [V] to be applied to the microcomputer 14. The motor driver 15 controls the energization timing of the stator winding of the DC fan motor 16 in response to a signal from the microcomputer 14, which is based on rotational position information on the DC fan motor 16. The switch board 17 is mounted on an operation panel for the indoor unit A. An ON/OFF switch, a test run switch, and the like are arranged on the switch board 17. The receiver 18a receives a remote operation signal (e.g., an ON/OFF signal, a cooling/heating switching signal, or a room temperature setting signal) from a wireless remote controller 60. The display panel 18 displays an operating state of the air conditioner. The flap motor 19 serves to move flaps for changing the blowing direction of cool/warm air.

In addition, the control circuit includes a room temperature sensor 20 for detecting the room temperature, a heat exchanger temperature sensor 21 for detecting the temperature of the indoor heat exchanger, and a humidity sensor 22 for detecting the room humidity. Detection values obtained by these sensors are A/D-converted to be fetched. A control signal from the microcomputer 14 is transmitted to the outdoor unit B through a serial circuit 23 and a terminal board $T_3$. In addition, a triac 26 and a heater relay 27 are controlled by the microcomputer 14 through a driver 24, thereby performing phase control of power supplied to a re-heating heater 25 used for a drying operation.

Reference numeral 30 denotes an external ROM for storing "specific data" specifying the type and characteristics of the air conditioner. These specific data are fetched from the external ROM 30 immediately after the power supply is turned on and an operation is stopped. When the power supply is turned on, input of a command from the wireless remote controller 60 or detection of the state of the ON/OFF switch or the test run switch (which operations will be described later) are not performed until fetching of the specific data from the external ROM 30 is completed.

The control circuit in the outdoor unit B will be described next.

In the outdoor unit B, terminal boards $T'_1$, $T'_2$, and $T'_3$ respectively connected to terminal boards $T_1$, $T_2$, and $T_3$ in the indoor unit A are arranged. Reference numeral 31 denotes a varistor connected in parallel with the terminal boards $T'_1$ and $T'_2$; 32, a noise filter; 34, a reactor; 35, a voltage double rectifier for doubling a voltage; 36, a noise filter; and 37, a smoothing circuit for obtaining a DC voltage of about 280 [V] from an AC voltage of 100 [V].

Reference numeral 39 denotes a serial circuit for performing signal conversion of a control signal supplied from the indoor unit A through the terminal board $T'_3$ to transmit it to a microcomputer 41; 40, a current detector for detecting a current, supplied to a load in the outdoor unit B, in a current transformer (CT) 33, smoothing the current into a DC voltage, and applying the DC voltage to the microcomputer 41; 41, the microcomputer; 42, a switching power supply circuit for generating a power supply voltage for the microcomputer 41; and 38, a motor driver for performing PWM control of power supplied to a compressor motor 43 (to be describe later) on the basis of a control signal from the microcomputer 41. The six power transistors of the motor driver 38 are connected in the form of a three-phase bridge, thus constituting a so-called inverter unit. Reference numeral 43 denotes a compressor motor for driving the compressor for the refrigeration cycle; 44, a discharge temperature sensor for detecting the temperature of the refrigerant on the discharge side of the compressor; 45, a fan motor controlled in three steps of speed and designed to send air to the outdoor heat exchanger; and 46 and 47, a 4-way valve and a solenoid valve, respectively, used to switch the paths of the refrigerant in the refrigeration cycle.

Furthermore, in the outdoor unit B, an outdoor temperature sensor 48 for detecting an outdoor temperature is arranged near the air intake port, and a heat exchanger temperature sensor 49 for detecting the temperature of the outdoor heat exchanger is arranged. Detection values obtained by these sensors 48 and 49 are A/D-converted and fetched by the microcomputer 41.

Reference numeral 50 denotes an external ROM having the same function as that of the external ROM 30 in the indoor unit A. The inherent data about the outdoor unit B, which are similar to those described with reference to the external ROM 30, are stored in the ROM 50.

Note that reference symbol F in each of the control circuits of the indoor unit A and the outdoor unit B denotes a fuse.

Each of the microcomputers (control elements) 14 and 41 is designed such that a ROM for storing programs in advance, a RAM for storing reference data, and a CPU for executing the programs are housed in the same package (87C196MC (MCS-96 series) available from Intel Corporation).

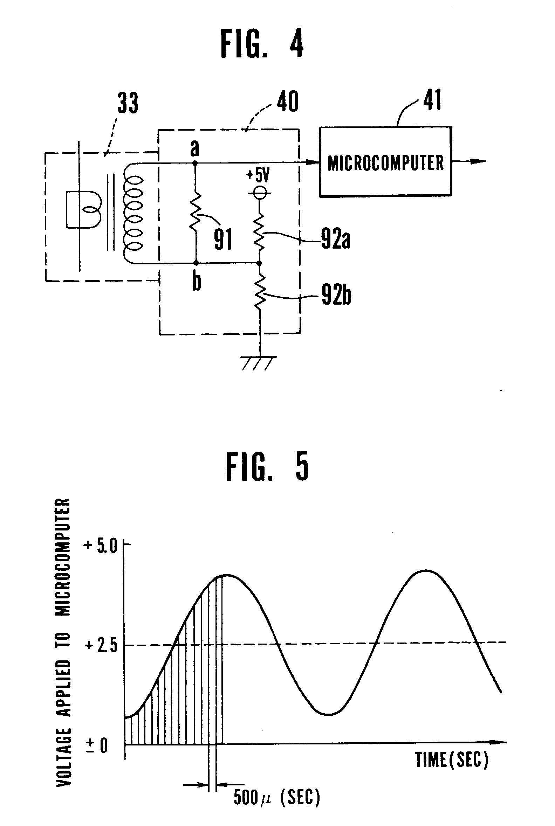

Fig. 4 shows a current detector, used for the air conditioner, according to an embodiment of the present invention. Fig. 4 is a detailed circuit diagram of the current detector 40 shown in Fig. 3.

The current detector 40 comprises the current transformer 33 for detecting a current flowing in the outdoor unit B of the air conditioner, a resistor 91 connected in parallel with the secondary side of the current transformer 33, and voltage dividing resistors 92a and 92b. A voltage at an output terminal $\underline{a}$ of the current transformer 33 is directly applied to the A/D port of the microcomputer 41. The microcomputer 41 fetches this data at a period of 500 μsec.

A voltage of +5 [V] is applied to the series circuit of the voltage dividing resistors 92a and 92b. Since the resistors 92a and 92b have the same resistance, a voltage of 2.5 [V] is applied to the node between the resistors 92a and 92b, i.e., an output terminal $\underline{b}$ of the current transformer 33.

The resistance of the resistor 91 is set such a manner that the voltage at the output terminal $\underline{a}$ of the current transformer 33 oscillates by 2.5 [V] upward and downward with respect to the level of 2.5 [V] (the voltage at the output terminal $\underline{b}$), and that when the voltage is 2.5 [V] on the positive side, the current peak value corresponds to a current of 30 [A].

Consequently, a voltage which may change from 0 to 5 [V] is applied to the A/D port of the microcomputer 41.

Fig. 5 shows the waveform of a voltage (a voltage waveform corresponding to a current) to be applied to the microcomputer 41, which waveform corresponds to a sine wave (having no distortion) oscillating with respect to the level of 2.5 [V]. This change in voltage is A/D-converted at a period of 500 μsec to be stored, as digital data, in the microcomputer. Note that in Fig. 5, a portion representing a time width of 500 μsec is enlarged.

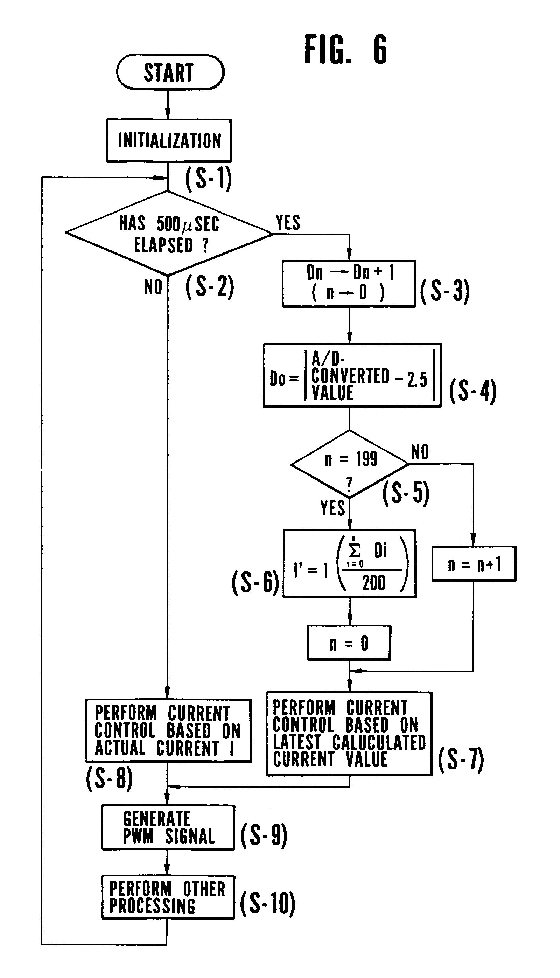

Fig. 6 is a flow chart showing a principal operation of current calculation processing performed by the microcomputer 41.

When the power switch (not shown) of the air conditioner is turned on, a current calculating operation is started. Initialization is performed first (step S-1), and a timer incorporated in the microcomputer 41 starts counting. Before 500 μsec elapses, current control is performed on the basis of an actual current value I (step S-8), a PWM (pulse width modulation) signal is generated (step S-9), and other control is performed (step S-10). After a lapse of 500 μsec (step S-2), already stored data $D_n$ is changed to $D_{n+1}$ (step S-3) (n → 0). The voltage value at the output terminal $\underline{a}$ of the current transformer 33 is fetched as current data, and a voltage of 2.5 [V] as the central level of the sine wave is subtracted from the digital value of the voltage applied to the microcomputer 41. The absolute value of the resultant voltage is set as data $D_0$ (step S-4). With this operation, the current can be fetched upon full-wave rectification of the oscillation amplitude. Thereafter, current calculation is performed according to the following equation (step S-6). Note that at the start of an operation, current calculation is not performed until 200 data $D_n$ are fetched (step S-5). A current value I' is calculated according to the following equation only when 200 data are fetched (step S-6).

$$I' = I\{(\sum_{i=0}^{n} D_i)/200\}$$

By performing a current calculating operation based on this flow chart, the current value I' (substantially corresponding to the effective value) can be calculated every 500 μsec. Current control is performed by using the latest current value I' calculated in this manner (step S-7). A PWM signal is generated (step S-9). Other control operations are then performed (step S-10). If n = 199, with a 50 Hz AC voltage, the average value of current values corresponding to five periods can be obtained; and with a 60 Hz AC voltage, the average value of current values corresponding to six periods.

In the case shown in Fig. 6, current calculation is

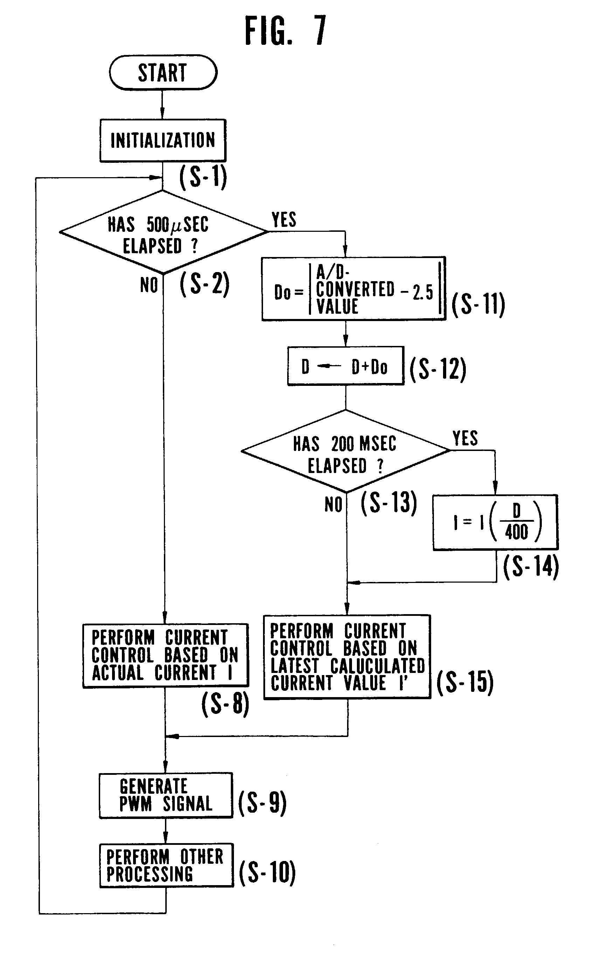

performed every 500 μsec. Fig. 7 shows a case wherein current calculation is performed every 200 msec.

In the current calculation processing shown in Fig. 7, steps (S-1) and (S-2) are the same as those in Fig. 6. However, data $D_0$ is calculated (step S-11) when 500 μsec elapses, similar to step (S-4) in Fig. 6. Subsequently, the data $D_0$ fetched every 500 μsec is added to data D (step S-12). This processing is repeated for 200 msec to fetch and store 400 data. When 200 msec elapses (step S-13), a current value I' is calculated according to the following equation (step S-14).

$$I' = I(\frac{D}{400})$$

Similar to the case shown in Fig. 6, current control is performed on the basis of the latest current value I' calculated in this manner (step S-15), a PWM signal is generated (step S-9), and other control operations are performed (step S-10).

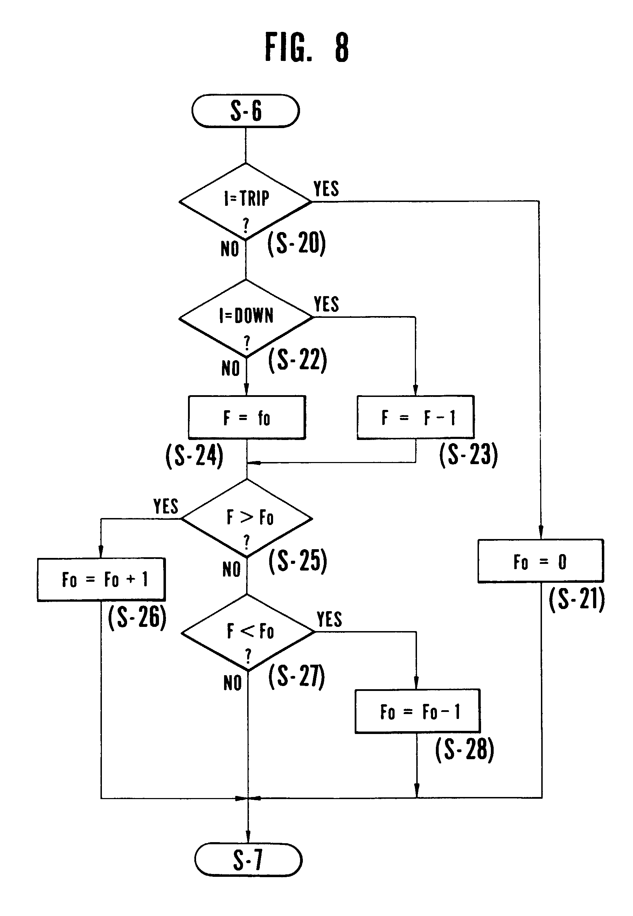

Fig. 8 is a flow chart showing a procedure for correcting a frequency $F_0$ on the basis of the operation in step (S-6) in Fig. 6, i.e., the actual current value I, when three-phase AC power is supplied to the compressor.

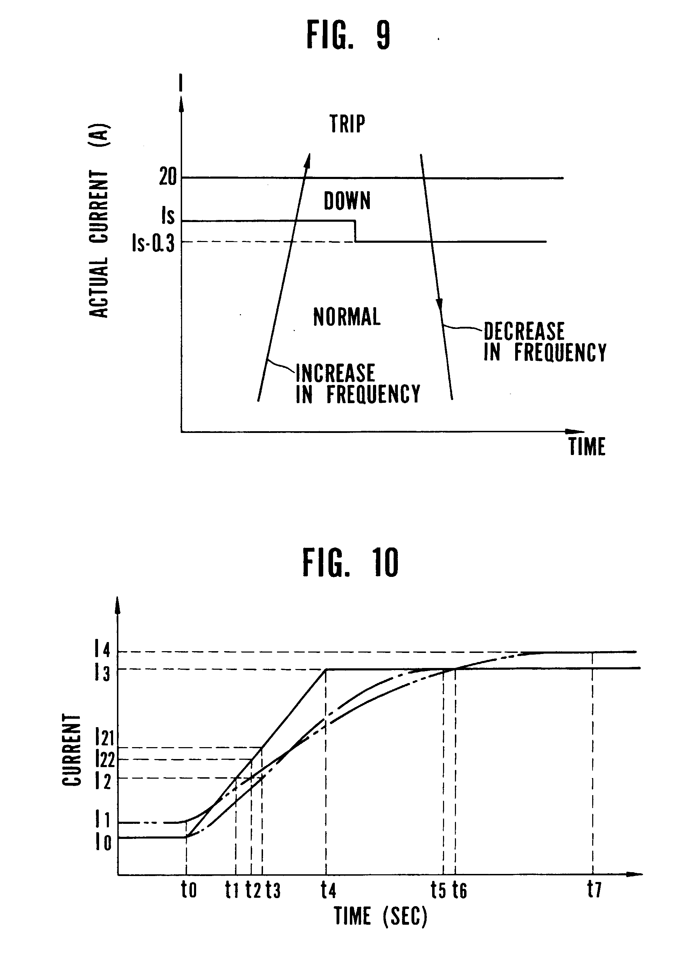

Note that "I = TRIP" in the flow chart indicates a case wherein the actual current value I is in the TRIP region shown in Fig. 9, i.e., the region where the actual current value I exceeds the permissible current of 20 [A], and that "I = DOWN" indicates a case wherein the actual current value I is in the DOWN region in Fig. 9, i.e., the region in which the actual current value I is very close to the permissible current of 20 [A]. In addition, "$I_s$" in Fig. 9 is a value set to prevent the actual current value I from exceeding the permissible current of 20 [A]. A differential value is set between the value $I_s$ set when the actual current value I increases and that set when the actual current value I decreases. In this embodiment, $I_s$ = 19.8 [A] is set in consideration of the minimum capacity variation range (1 Hz) of the compressor. If the permissible current, i.e., the maximum current consumption, is to be controlled below 15 [A], $I_s$ = 14.8 [A] may be set.

The flow chart shown in Fig. 8 will be described below. The microcomputer 41 checks whether the actual current value I is in the TRIP region shown in Fig. 9 (step S-20). If the actual current value I is in the TRIP region in Fig. 9, it is determined that the operating current exceeds the permissible current of 20 [A] and hence the air conditioner is in a dangerous state, thus setting the frequency $F_0$ of three-phase AC power supplied to the compressor to be 0 (step S-21). In contrast to this, if the actual current value I is not in the TRIP region, it is checked whether the actual current value I is in the DOWN region (step S-22). If the actual current value I is in the DOWN region, a target frequency F is decreased by 1 Hz (step S-23). If the actual current value I is not in the DOWN region, the target frequency F is set to be equal to the frequency value $F_0$ supplied from

the indoor unit A through the communication line 200 (step S-24).

Subsequently, the frequency value $F_0$ actually supplied to the compressor is compared with the target frequency F (step S-25). If $F > F_0$, the supplied frequency value $F_0$ is increased by 1 Hz (step S-26). If $F \leq F_0$, it is checked whether $F < F_0$ (step S-27). If $F < F_0$, the supplied frequency value $F_0$ is decreased by 1 Hz (step S-28). However, if $F = F_0$, the supplied frequency value $F_0$ is kept unchanged.

By obtaining the actual current value I in the above-described manner, current control based on the actual current value I can be performed. That is, the range of variation in actual current can be controlled to be narrow as compared with the conventional control scheme using an approximate current value obtained upon smoothing by the capacitor.

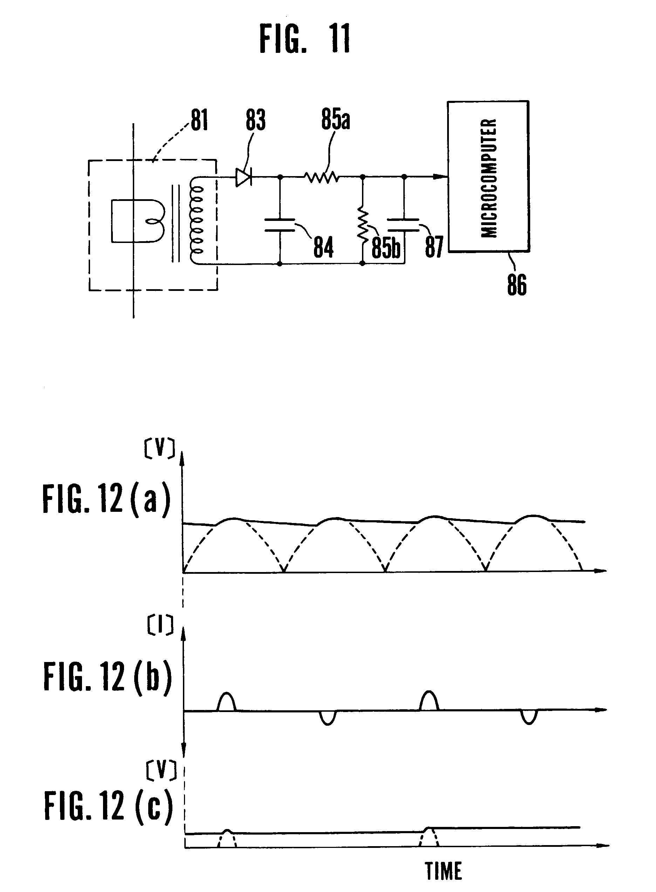

Fig. 10 shows changes in actual current value detected by the present invention and changes in current value detected by the conventional current detector shown in Fig. 11. Note that the current detector shown in Fig. 11 uses a 220 $\mu$F capacitor as a smoothing capacitor 84, 2 K$\Omega$ resistors as resistors 85a and 85b, and a 1-$\mu$F capacitor as a capacitor 87.

Referring to Fig. 10, the solid curve represents an actual current value detected by the present invention; and the one dotted chain curve and the two dotted chain curve, current values detected by the prior art.

The changes in current which are indicated by the one dotted chain curve appear when the capacitance of the smoothing capacitor is set such that the effective value of the current (corresponding to the actual current value detected by the present invention) is obtained when the current is stable. The changes in current which are indicated by the two dotted chain curve appear when the capacitance of the smoothing capacitor is set such that almost the peak current value of the current waveform is obtained when the current is stable. The value of each element of the current detector shown in Fig. 11 is a constant for obtaining the peak value of a current, and a current transformer 81 outputs a voltage of 0 [V] for an instantaneous current of 0 [A], and a voltage of 5 [V] for an instantaneous current of 30 [A].

In the conventional current detector shown in Fig. 11, a microcomputer 86 A/D-converts a voltage (0 to 5 [V]) corresponding to a current value and fetches the resultant value, thus performing current control by associating the current value with the digital data corresponding to the voltage.

Referring to Fig. 10, when the actual current value is stable at $I_0$, the current value indicated by the one dotted chain curve exhibits a value $I_0$ (effective value), while the current value indicated by the two dotted chain curve exhibits a value $I_1$ (peak value).

When the current increases at a rate of $(I_3 - I_0)/(t_4 - t_0)$ in the interval between time $t_0$ and time $t_4$, the current values respectively indicated by the one and two dotted chain curves increase at the same time. However, since the smoothing capacitor needs to be charged, the rates of change in current which are indicated by the one and two dotted chain curves decrease with respect to the changes in actual current value, thus causing delays before the respective current values reach the actual current value. For example, if the actual current value becomes a value $I_2$ at time $t_1$, the current value indicated by the one dotted chain curve reaches the same value at time $t_3$; and the current value indicated by the two dotted chain curve, at time $t_2$.

Therefore, if a current is detected by the conventional current detector shown in Fig. 11, for example, when the current $I_2$ is detected, the actual currents increase to values $I_{21}$ and $I_{22}$, respectively. For this reason, when current control is performed, a preset current value must be set to be low in consideration of such an increase in current. In addition, since such an increase in current is influenced by the rate of change in actual current (a larger increase in current with an increase in rate of change), the preset current value must be set in consideration of a difference in increase in current depending on the rate of change.

That is, the range of variation in actual current is increased in accordance with a margin given to a preset current value.

In addition, the detected currents indicated by the one dotted chain curve and the two dotted chain curve converge at delayed times, i.e., time $t_5$ and time $t_7$.

As described above, since the conventional current detector uses a smoothing capacitor, the response speed with respect to changes in actual current is low.

In the present invention, although the microcomputer 41 determines on the basis of an output from the current transformer 33 whether the operating current reaches a preset value at which the power source is turned off, since the output from the current transformer 33 is directly fetched by the microcomputer 41, the operation current can be detected as an effective value without a delay. For this reason, the minimum operating current at which the power source is turned off can be set to be larger than 18 [A] as close to 20 [A] as possible. As a result, since inverter control of the motor for driving the compressor can be performed up to a value close to 20 [A], the cooling/heating power can be increased.

Figs. 12(a) and 12(b) respectively show the waveforms of currents detected by the current transformer 33 when the compressor is actually operated by using a signal-phase AC power. The distortion of the current waveform shown in Fig. 12(b) is caused when double voltage rectification is performed by a rectifying/smoothing circuit. Fig. 12(a) shows a terminal voltage of the smoothing capacitor after double voltage rectification. Referring to Fig. 12(a), the broken curve indicates changes in voltage after full wave rectification. The current shown in Fig. 12(b) flows only when the charge of the capacitor is consumed, and the terminal voltage of the smoothing capacitor becomes lower than the voltage obtained after full wave rectification.

Fig. 12(c) shows changes in voltage after the current detected by the current transformer 33 is smoothed by the capacitor. The conventional current detector determines an operating current value on the basis of this voltage. Therefore, there is a large difference between the actual current (corresponding to the area of the waveform shown in Fig. 12(b)) and the current value corresponding to the voltage shown in Fig. 12(c).

In current detected according to the present invention, since the current waveform shown in Fig. 12(b) is directly read as changes in data, the average value (effective value) of the waveform shown in Fig. 12(b) can be obtained. It is apparent that the waveform shown in Fig. 12(c) exhibits a current value larger than this average value. In addition, according to the waveform shown in Fig. 12(c), it is apparent that the capacitance of the smoothing capacitor shown in Fig. 11 is increased in order to reduce the range of variation in voltage in a stable period.

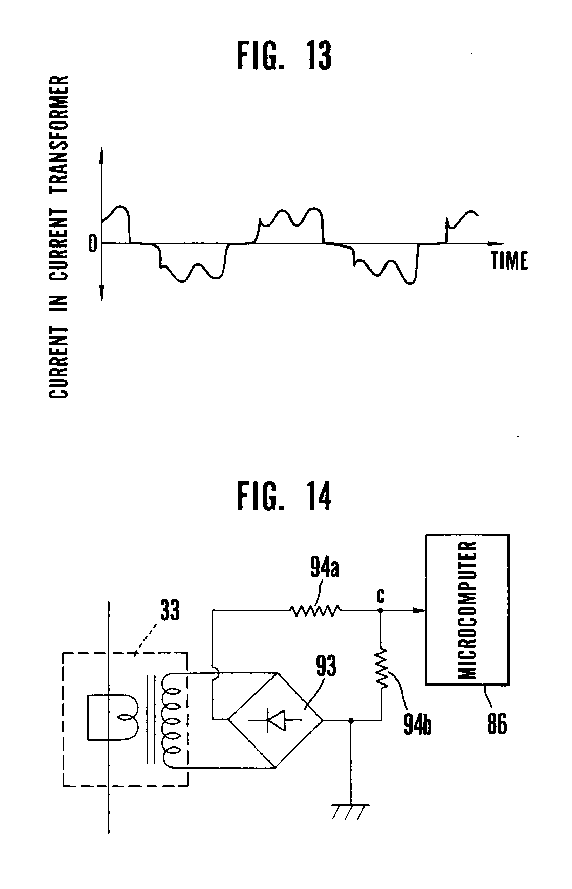

Fig. 13 is a graph showing changes in single-phase component flowing in the current transformer when a three-phase AC power is used. Even with such a distorted waveform, the average value of a current can be directly obtained by using the current detector of the present invention.

Fig. 14 shows another embodiment of the current detector of the present invention shown in Fig. 4. The same reference numerals in Fig. 14 denote the same parts as in Fig. 4.

In this embodiment, an output voltage from a current transformer 33 is subjected to full wave rectification in a full-wave rectifier 93, the output from the full-wave rectifier 93 is voltage-divided by resistors 94a and 94b, and a voltage at a voltage-dividing point c is input to a microcomputer 41.

According to this embodiment, the resolution of current detection is doubled to achieve a reduction in error in current detection.

In the above embodiments, an air conditioner is exemplified as an electric load to which the present invention is applied. It is, however, apparent that the present invention can be applied to various other types of electric loads.

According to the present invention, the following effects can be obtained.

①Since a current waveform is stored upon conversion into changes in current value at a predetermined period, and the average value of the current values is set as the current value of this current waveform, the effective value of the current waveform can be directly obtained. That is, since the effective value can be constantly obtained even while the current varies, a preset value with respect to the upper current limit for current control can be set to be close to the upper current limit.

Therefore, when the present invention is applied to an air conditioner, the operating current for the air conditioner can be substantially increased to a value close to the permissible current, and hence the maximum capacity operation of the air conditioner can always be performed at the start of an operation within the upper current limit, thus improving the starting characteristics of an air-conditioning operation.

②Since a current waveform is stored upon conversion into changes in current value at a predetermined period, and the average value of the current values is set as the current value of this current waveform, the effective value can always be obtained regardless of the distortion or shape of a current waveform. Therefore, as compared with the conventional current detector in which the distortion or deformation of a current waveform is absorbed by the smoothing capacitor, the response speed with respect to changes in current is increased by an amount corresponding to the delay based on the smoothing capacitor. In addition, since an effective value can be directly obtained without a delay instead of an average current value, current control based on the effective value can always be performed regardless of the distortion of a current waveform.

## Claims

1. Apparatus for detecting an alternating current flowing in an electric load having a current transformer (33) to detect said alternating current, comprising:

converting means (40, 41) for converting a value of said current supplied from an AC power supply to said electric load (80) to a mathematical value corresponding to said current, said mathematical value being an absolute value taken with respect to a central value of said alternating current;

dividing means (91) for dividing a repetitive period of said current N times at an equal interval;

starting means (41) for allowing said converting means to perform a converting action at every said equal interval;

calculating means (41) for calculating an average value of N consecutive mathematical values of said current converted at said equal interval by said converting means; and

detecting means (41) for detecting said average value obtained by said calculating means (41) as a current value supplied to the electric load.

2. An apparatus according to claim 1, wherein said current value detected by said current transformer (40,41) is fetched as a change in voltage value with respect to a positive or negative reference voltage.

3. An apparatus according to claim 1 or 2, wherein said electric load (84) is an air conditioner or air conditioners.

4. An apparatus according to claim 3, wherein said air conditioner comprises a compressor of variable power type adapted to be driven by said current and further comprising means for controlling said compressor in such a manner as to reduce the power of said compressor so that said average value may not exceed a predetermined value.

5. An apparatus according to claim 4, wherein said current is a current supplied to said compressor.

6. An apparatus according to claim 5, further comprising means for converting said current supplied from said AC power supply to a DC power; means for re-converting said DC power to AC power of any frequency based on the PWM technique; means for supplying said re-converted AC power to said compressor; and means for varying the frequency of said re-converted AC power in order to change the power of said compressor.

**Patentansprüche**

1. Vorrichtung zum Detektieren bzw. Messen eines alternierenden Stromes bzw. Wechselstroms, der in einer elektrischen Last bzw. Stromlast fließt, welche einen Stromtransformator (33) aufweist, um den alternierenden Strom bzw. Wechselstrom zu messen, welche umfaßt:

   - Umwandlungsmittel (40, 41), um einen Wert des Stroms, welcher der elektrischen Last (80) von einer AC-Leistungs- bzw. Wechselstromversorgung zugeführt wird, in einen mathematischen Wert umzuwandeln, der dem Strom entspricht, wobei der mathematische Wert einen Absolutwert darstellt, der bezüglich eines Mittelwertes des Wechselstroms gebildet wird;
   - eine Teilungseinrichtung (91), um eine sich wiederholende Periode bzw. Zeitdauer des Stromes N-mal bei einem gleichen Zeitintervall zu teilen;
   - eine Starteinrichtung (41), um es dem Umwandlungsmittel zu ermöglichen, bei jedem gleichen Zeitintervall einen Umwandlungsvorgang vorzunehmen;
   - eine Berechnungseinrichtung (41), um einen Mittelwert von N aufeinanderfolgenden mathematischen Werten des Stroms zu berechnen, die bei jedem gleichen Zeitintervall von dem Umwandlungsmittel umgewandelt wurden; und
   - eine Detektions- bzw. Meßeinrichtung (41), um den von der Berechnungseinrichtung (41) erhaltenen Mittelwert als einen Stromwert zu detektieren, welcher der Stromlast zugeführt wird.

2. Vorrichtung nach Anspruch 1, bei welcher der von dem Stromtransformator (40, 41) detektierte Stromwert als eine Änderung eines Spannungswertes in Bezug auf eine positive oder negative Referenzspannung eingelesen wird.

3. Vorrichtung nach Anspruch 1 oder 2, bei welcher die Stromlast (84) ein Klimagerät oder mehrere Klimageräte darstellt.

4. Vorrichtung nach Anspruch 3, bei welcher das Klimagerät einen Kompressor bzw. Verdichter mit variabler Leistung umfaßt, welcher ausgelegt ist, um von dem Strom angetrieben zu werden, und welche außerdem eine Einrichtung zum Regeln des Kompressors umfaßt, und zwar in einer solchen Art und Weise, daß der Strom bzw. die Leistung des Kompressors reduziert wird, so daß der Mittelwert einen vorbestimmten Wert nicht überschreitet.

5. Vorrichtung nach Anspruch 4, bei welcher der Strom einen Strom darstellt, der dem Kompressor zugeführt wird.

6. Vorrichtung nach Anspruch 5, welche zusätzlich umfaßt:

   - eine Einrichtung, um den von der Wechselstromversorgung zugeführten Strom in einen Gleichstrom umzuwandeln;
   - eine Einrichtung, um den Gleichstrom in einen Wechselstrom zurückumzuwandeln, und zwar mit einer beliebigen Frequenz, basierend auf dem PWM-Verfahren (pulse width modulation);
   - eine Einrichtung, um dem Kompressor den zurückumgewandelten Wechselstrom zuzuführen; und
   - eine Einrichtung zum Variieren der Frequenz des zurückumgewandelten Wechselstromes, um den Strom bzw. die Leistung des Kompressors zu ändern.

**Revendications**

1. Appareil de détection d'un courant alternatif circulant dans une charge électrique comportant un transformateur d'intensité (33) pour détecter le dit courant alternatif, comprenant :

   des moyens de conversion (40, 41) pour convertir une valeur du dit courant fourni par une alimentation en courant alternatif à la dite charge électrique (80), en une valeur mathématique correspondant au dit courant, la dite valeur mathématique étant une valeur absolue prise par rapport à une valeur centrale du dit courant alternatif ;
   des moyens de division (91) pour diviser une période répétitive du dit courant N fois à intervalles égaux ;

des moyens de démarrage (41) pour permettre aux dits moyens de conversion d'exécuter une action de conversion à chacun des dits intervalles égaux ;

des moyens de calcul (41) pour calculer une valeur moyenne de N valeurs mathématiques consécutives du dit courant converti aux dits intervalles égaux par les dits moyens de conversion ; et

des moyens de détection (41) pour détecter la dite valeur moyenne fournie par les dits moyens de calcul (41) comme valeur du courant fourni à la charge électrique.

2. Appareil suivant la revendication 1, dans lequel la dite valeur de courant détectée par le dit transformateur d'intensité (40, 41) est saisie comme une variation de la valeur de tension par rapport à une tension de référence positive ou négative.

3. Appareil suivant la revendication 1 ou 2, dans lequel la dite charge électrique (84) est un ou plusieurs climatiseurs;

4. Appareil suivant la revendication 3, dans lequel le dit climatiseur comprend un compresseur du type à puissance variable prévu pour être entraîné par le dit courant, et comprenant en outre des moyens de commande du dit compresseur de manière à réduire la puissance du dit compresseur de sorte que la dite valeur moyenne ne puisse pas dépasser une valeur prédéterminée.

5. Appareil suivant la revendication 4, dans lequel le dit courant est un courant fourni au dit compresseur.

6. Appareil suivant la revendication 5, comprenant en outre des moyens de conversion du dit courant, fourni par la dite alimentation en courant alternatif, en une alimentation en courant continu ; des moyens de reconversion de la dite alimentation en courant continu en une alimentation en courant alternatif de fréquence quelconque basée sur la technique de modulation de largeur d'impulsion ; des moyens de fourniture de la dite alimentation reconvertie en courant alternatif au dit compresseur ; et des moyens de modification de la fréquence de la dite alimentation reconvertie en courant alternatif, afin de modifier la puissance du dit compresseur.

EP 0 564 095 B1

# FIG. 1

**INDOOR UNIT A**

**OUTDOOR UNIT B**

# FIG. 2

10

FIG. 3

INDOOR UNIT A

OUTDOOR UNIT B

EP 0 564 095 B1

# FIG. 4

# FIG. 5

# FIG. 6

START

INITIALIZATION (S-1)

HAS $500\,\mu$SEC ELAPSED ? — YES

NO (S-2)

$Dn \rightarrow Dn + 1$
$( n \rightarrow 0 )$ (S-3)

$Do = \left| \begin{array}{l} \text{A/D-} \\ \text{CONVERTED} - 2.5 \\ \text{VALUE} \end{array} \right|$ (S-4)

$n = 199$ ? — NO

YES (S-5)

(S-6) $I' = I \left( \dfrac{\sum\limits_{i=0}^{} Di}{200} \right)$

$n = n+1$

$n = 0$

PERFORM CURRENT CONTROL BASED ON ACTUAL CURRENT I (S-8)

PERFORM CURRENT CONTROL BASED ON LATEST CALUCULATED CURRENT VALUE (S-7)

GENERATE PWM SIGNAL (S-9)

PERFORM OTHER PROCESSING (S-10)

# FIG. 7

START

INITIALIZATION

(S-1)

HAS 500 $\mu$ SEC ELAPSED ? — YES

NO (S-2)

$D_0 = \left| \begin{array}{l} A/D\text{-} \\ CONVERTED \\ VALUE \end{array} - 2.5 \right|$ (S-11)

$D \leftarrow D + D_0$ (S-12)

HAS 200 MSEC ELAPSED ? — YES

NO (S-13)

$I = I\left(\dfrac{D}{400}\right)$

(S-14)

PERFORM CURRENT CONTROL BASED ON ACTUAL CURRENT I

(S-8)

PERFORM CURRENT CONTROL BASED ON LATEST CALUCULATED CURRENT VALUE I' (S-15)

GENERATE PWM SIGNAL (S-9)

PERFORM OTHER PROCESSING (S-10)

# FIG. 8

```
            ┌──────────┐
            │   S-6    │
            └────┬─────┘
                 │
              ╱─────╲
             ╱ I=TRIP ╲  YES ──────────────────────┐
             ╲   ?    ╱                             │
              ╲─────╱  (S-20)                       │
            NO  │                                   │
                │                                   │
              ╱─────╲                               │
             ╱ I=DOWN ╲  YES ──────┐                │
             ╲   ?    ╱            │                │
              ╲─────╱  (S-22)      │                │
            NO  │                  │                │
                │                  │                │
         ┌──────────┐       ┌──────────┐            │
         │  F = fo  │       │ F = F-1  │            │
         └────┬─────┘       └────┬─────┘            │
         (S-24)│          (S-23) │                  │
                │◄────────────────┘                 │
              ╱─────╲                               │
   YES ──────╱ F > Fo ╲                       ┌──────────┐
    │        ╲   ?    ╱                       │  Fo = 0  │
    │         ╲─────╱  (S-25)                 └────┬─────┘
    │        NO │                             (S-21)│
┌──────────┐    │                                  │
│Fo = Fo + 1│   │                                  │
└────┬─────┘  ╱─────╲                               │
(S-26)│      ╱ F < Fo ╲  YES ──────┐                │
      │      ╲   ?    ╱            │                │
      │       ╲─────╱  (S-27)      │                │
      │      NO │           ┌──────────┐            │
      │         │           │ Fo = Fo-1│            │
      │         │           └────┬─────┘            │
      │         │           (S-28)│                 │
      └─────────┼─────────────────┴─────────────────┘
                │
            ┌──────────┐
            │   S-7    │
            └──────────┘
```

# FIG. 9

# FIG. 10

# FIG. 11

81  83  85a

MICROCOMPUTER

84  85b  87

86

## FIG. 12(a)

[V]

## FIG. 12(b)

[I]

## FIG. 12(c)

[V]

TIME

# FIG. 13

# FIG. 14